# EUROPEAN PATENT SPECIFICATION

(11) **EP 4 400 191 B1**
(45) Date of publication and mention of the grant of the patent: **07.10.2026**
(21) Application number: 22867159.0
(22) Date of filing: 18.08.2022
(51) Int. Cl.: B01D 19/04, C10N 30/18, C10N 40/04, C08F 220/12, C08F 220/26, C08F 230/08, C10M 145/14, C10M 145/26, C10M 155/02

(54) **ANTIFOAMING AGENT, LUBRICATING OIL COMPOSITION CONTAINING ANTIFOAMING AGENT, AND MACHINE USING LUBRICATING OIL COMPOSITION**
ANTISCHAUMMITTEL, SCHMIERÖLZUSAMMENSETZUNG MIT DEM ANTISCHAUMMITTEL UND MASCHINE MIT DER SCHMIERÖLZUSAMMENSETZUNG
AGENT ANTIMOUSSE, COMPOSITION D'HUILE LUBRIFIANTE CONTENANT UN AGENT ANTIMOUSSE, ET MACHINE UTILISANT LA COMPOSITION D'HUILE LUBRIFIANTE

(30) Priority: 07.09.2021 JP 2021145316
(43) Date of publication of application: 17.07.2024
(73) Proprietor: DIC Corporation, Tokyo 174-8520 (JP)
(72) Inventor: FUJIWARA, Ryuta, Ichihara-shi, Chiba 290-8585 (JP); KOIKE, Nobuyuki, Ichihara-shi, Chiba 290-8585 (JP)
(74) Representative: TBK
(86) International application number: PCT/JP2022/031154
(87) International publication number: WO 2023/037837

(56) References cited:
- EP-A1- 4 268 920
- WO-A1-2013/161948
- WO-A1-2022/138186
- WO-A1-2022/138186
- WO-A1-2022/145348
- JP-A- 2001 508 357
- JP-A- 2008 542 462
- JP-A- S5 969 110
- US-A1- 2019 256 790

## Description

### Technical Field

The present invention relates to a lubricating oil composition containing a defoaming agent, and use of the lubricating oil composition in a machine.

### Background Art

In recent years, the reduction of carbon dioxide emissions has become an important theme in industry. Among others, carbon dioxide emissions from transportation equipment, including automobiles, account for nearly 20% of the total, and as one of the measures to reduce these emissions, switching from gasoline-powered vehicles to electric vehicles (EVs) has been proposed as the policy of countries.

The most important issue in EVs is to improve fuel economy, and to this end, studies are being conducted at a rapid pace, including downsizing of vehicle bodies and improvement in the efficiency of the drive system. One of the challenges in improvement in the efficiency of the drive system is the foaming of lubricating oil. The lubricating oil is becoming lower in viscosity in order to reduce frictional resistance, and this lowered viscosity makes the lubricating oil more prone to foam.

When high-load operation or high-speed running is performed continuously, foaming increases in the lubricating oil with lowered viscosity, which may result in problems such as reductions in lubrication performance and cooling efficiency by foaming; the occurrence of wear and burning due to rupture of oil films at friction points; and the acceleration of deterioration of the lubricating oil due to a rise in oil temperature.

Given these circumstances, the lubricating oil having high defoaming properties is demanded so that foaming can be prevented from the initial stage of operation over a long period of time. The lubricating oil contains a defoaming agent for the purpose of preventing defoaming. Polysiloxane-based defoaming agents are known as the defoaming agent, and various polysiloxane-based defoaming agents have been developed (PTL 1 to PTL 3).

PTL 4 discloses a defoaming agent and lubricating oil composition. In particular, a defoaming agent obtainable by a process is disclosed, the process including the step of:
(i) polymerizing at least one defoaming agent monomer in a polymerization solvent under coexistence of a polymer soluble in the polymerization solvent.

### Citation List

### Patent Literature

PTL 1: Japanese Unexamined Patent Application Publication No. 2000-87065
PTL 2: Japanese Unexamined Patent Application Publication No. 2009-235252
PTL 3: Japanese Unexamined Patent Application Publication No. 2008-120889
PTL 4: US 2019/256790 A1

### Summary of Invention

### Technical Problem

The lubricating oil is becoming lower in viscosity in order to achieve higher performance and more enhanced fuel economy, but unfortunately, conventional polysiloxane-based defoaming agents cannot provide sufficient defoaming properties for the low-viscosity lubricating oil.

An object of the present invention is to provide a defoaming agent exhibiting excellent defoaming properties.

### Solution to Problem

The inventors of the present invention have conducted earnest study in order to achieve the above object to find that a polymer with a polymerizable monomer (1) having a silicone chain-containing functional group and a polymerizable monomer (2) having a polyoxyalkylene chain-containing functional group as polymerization components is a defoaming agent exhibiting excellent defoaming properties, and have completed the present invention.

Specifically, the present invention relates to a defoaming agent as a polymer with a polymerizable monomer (1) having a silicone chain-containing functional group and a polymerizable monomer (2) having a polyoxyalkylene chain-containing functional group as polymerization components. Accordingly, the present invention provides a lubricating oil composition as defined in enclosed claim 1 and the use of said lubricating oil composition as defined in enclosed claim 9. Further beneficial embodiments are disclosed in enclosed dependent claims 2 to 8 and 10.

### Advantageous Effects of Invention

The present invention can provide a defoaming agent exhibiting excellent defoaming properties.

### Description of Embodiments

The following describes an embodiment of the present invention. The present invention is not limited to the following embodiment and can be implemented with modifications made as appropriate to the extent that the effects of the invention are not impaired.

In the specification of the present application, "(meth)acrylate" refers to one of acrylate and methacrylate or both.

### [Defoaming Agent]

The defoaming agent of the present invention is a polymer with a polymerizable monomer (1) having a silicone chain-containing functional group and a polymerizable monomer (2) having a polyoxyalkylene chain-containing functional group as polymerization components. In the following, the polymer with the polymerizable monomer (1) and the polymerizable monomer (2) as polymerization components may be referred to as a "polymer of the present invention."

In the present invention, the "polymerization components" means components forming a polymer and do not include solvents, polymerization initiators, and the like that do not form a polymer.

In the present invention, the "polymerizable monomer" means a compound having a polymerizable unsaturated group, and examples of the polymerizable unsaturated group of the polymerizable monomer (1) and the polymerizable monomer (2) include a (meth)acryloyl group, a (meth)acryloyloxy group, a (meth)acryloylamide group, a vinyl ether group, an allyl group, a styryl group, a (meth)acryloylamino group, and a maleimide group. Among these, a (meth)acryloyl group and a (meth)acryloyloxy group are preferred due to the availability of raw materials and good polymerization reactivity.

Examples of the silicone chain in the silicone chain-containing functional group of the polymerizable monomer (1) include a group represented by General Formula (SILICONE) below: 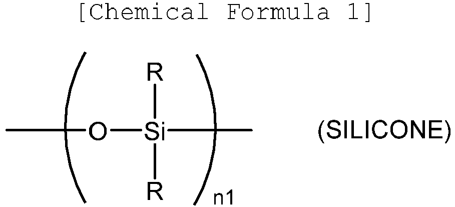 in General Formula (SILICONE) above,
Rs are each independently a C₁₋₁₈ alkyl group or a phenyl group, and
n1 is a repeating number.

The C₁₋₁₈ alkyl group as R may be any of a linear alkyl group, a branched alkyl group, and a cyclic alkyl group, and specific examples thereof include a methyl group, an ethyl group, a normal propyl group, an isopropyl group, a n-butyl group, a t-butyl group, a n-hexyl group, a cyclohexyl group, a n-octyl group, and a hexadecyl group.

The C₁₋₁₈ alkyl group as R is preferably a C₁₋₆ alkyl group and more preferably a methyl group.

The repeating number as n1 is, for example, an integer in a range of 1 to 200 and preferably an integer in a range of 1 to 150.

The number average molecular weight of the silicone chain portion of the silicone chain-containing functional group is, for example, in a range of 100 to 20,000, preferably in a range of 400 to 18,000, more preferably in a range of 1,000 to 15,000, and even more preferably in a range of 1,500 to 12,000.

The polymerizable monomer (1) is preferably one or more selected from the group consisting of a compound represented by General Formula (1-A) below and a compound represented by General Formula (1-B) below: 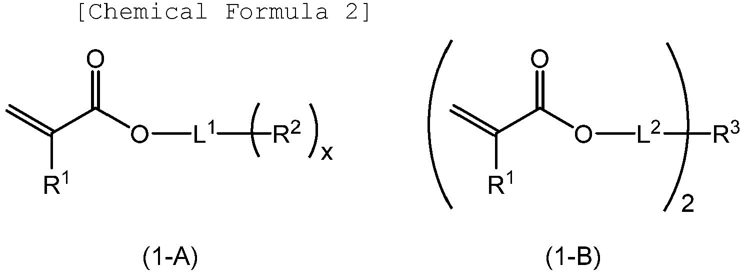 in General Formulae (1-A) and (1-B) above,
R¹ is a hydrogen atom or a methyl group,
L¹ is a divalent or trivalent organic group or a single bond,
L² is a divalent organic group or a single bond,
R² is a silicone chain-containing functional group,
R³ is a divalent silicone chain-containing functional group, and
x is an integer of 1 or 2.

In General Formula (1-A) above, when x is 2, the two R²s may be the same or different from each other. In General Formula (1-B) above, the two structures bracketed by parentheses may be the same or different from each other.

The divalent organic group as L¹ is preferably a C₁₋₅₀ alkylene group or a C₁₋₅₀ alkyleneoxy group.

Examples of the C₁₋₅₀ alkylene group as L¹ include a methylene group, an ethylene group, a n-propylene group, a n-butylene group, a n-pentylene group, a n-hexylene group, a n-heptylene group, a n-octylene group, a n-nonylene group, a n-decylene group, a n-dodecylene group, an isopropylene group, a 2-methylpropylene group, a 2-methylhexylene group, and a tetramethylethylene group.

The C₁₋₅₀ alkylene group as L¹ is preferably a C₁₋₁₅ alkylene group, more preferably a C₁₋₅ alkylene group, and more preferably a methylene group, an ethylene group, a n-propylene group, or an isopropylene group.

The C₁₋₅₀ alkyleneoxy group as L¹ is, for example, a group in which one or more -CH₂- in the alkylene group is replaced with -O-.

The C₁₋₅₀ alkyleneoxy group as L¹ is preferably a C₁₋₁₅ alkyleneoxy group, more preferably a C₁₋₈ alkyleneoxy group, even more preferably a methyleneoxy group, an ethyleneoxy group, a propyleneoxy group, an oxytrimethylene group, a butyleneoxy group, an oxytetramethylene group, a pentyleneoxy group, a heptyleneoxy group, an octyleneoxy group, a dimethyleneoxy group, a diethyleneoxy group, or a dipropyleneoxy group.

When the divalent organic group as L¹ is the C₁₋₅₀ alkylene group or the C₁₋₅₀ alkyleneoxy group, in these divalent organic groups, some of -CH₂- may be replaced with a carbonyl group (-C(=O)-) or a phenylene group, and in addition, a hydroxy group or the like may be bonded to a carbon atom.

The trivalent organic group as L¹ is a group with any one hydrogen atom in the divalent organic group described above replaced with a bonding hand and preferably a group with any one hydrogen atom in the C₁₋₅₀ alkylene group or the C₁₋₅₀ alkyleneoxy group replaced with a bonding hand.

Specific examples and the like of the C₁₋₅₀ alkylene group and the C₁₋₅₀ alkyleneoxy group are the same as above.

Examples of the divalent organic group as L² include the same ones as those for the divalent organic group as L¹.

The silicone chain-containing functional group as R² is preferably a group represented by General Formula (1-C) below: 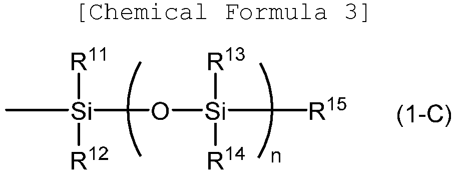 in General Formula (1-C) above,
R¹¹ is a C₁₋₆ alkyl group or a group represented by - OSi(R¹⁶)₃(R¹⁶s are each independently a C₁₋₃ alkyl group),
R¹² is a C₁₋₆ alkyl group or a group represented by - OSi(R¹⁷)₃(R¹⁷s are each independently a C₁₋₃ alkyl group),
R¹³ is a C₁₋₆ alkyl group,
R¹⁴ is a C₁₋₆ alkyl group,
R¹⁵ is a C₁₋₆ alkyl group, and
n is an integer of 0 or more.

R¹¹, R¹², R¹³, R¹⁴, R¹⁶, and R¹⁷ are each preferably a methyl group, and R¹⁵ is preferably a C₁₋₆ alkyl group.

The divalent silicone chain-containing functional group as R³ is preferably a group represented by General Formula (SILICONE) above.

The polymerizable monomer (1) is preferably a compound represented by General Formula (1-1) below: 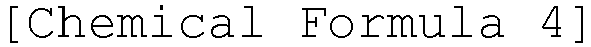 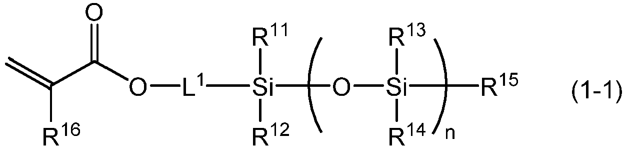 in General Formula (1-1) above,
R¹¹ is a C₁₋₆ alkyl group or a group represented by - OSi(R¹⁷)₃ (R¹⁷s are each independently a C₁₋₃ alkyl group),
R¹² is a C₁₋₆ alkyl group or a group represented by - OSi(R¹⁸)₃ (R¹⁸s are each independently a C₁₋₃ alkyl group),
R¹³ is a C₁₋₆ alkyl group,
R¹⁴ is a C₁₋₆ alkyl group,
R¹⁵ is a C₁₋₆ alkyl group,
R¹⁶ is a hydrogen atom or a methyl group,
L¹ is a divalent organic group, and
   n is an integer of 0 or more.

The polymerizable monomer (1) may be used individually or in combination.

The polymerizable monomer (1) can be produced by known methods. For the polymerizable monomer (1), commercially available products may be used.

The (poly)oxyalkylene chain-containing group of the polymerizable monomer (2) is a monovalent group containing a repeating portion of oxyalkylene or a divalent linking group containing a repeating portion of oxyalkylene.

When the polymer of the present invention is used as a defoaming agent for a lubricating oil composition, the (poly)oxyalkylene chain-containing group of the polymerizable monomer (2) enables it to exhibit compatibility with a lubricating oil base oil of the lubricating oil composition or additives for lubricating oils other than the defoaming agent.

Examples of the polymerizable monomer (2) having the polyoxyalkylene chain-containing group and having the (meth)acryloyl group as the polymerizable unsaturated group include polypropylene glycol mono(meth)acrylate, polyethylene glycol mono(meth)acrylate, polytrimethylene glycol mono(meth)acrylate, polytetramethylene glycol mono(meth)acrylate, poly(ethylene glycol/propylene glycol) mono(meth)acrylate, polyethylene glycol/polypropylene glycol mono(meth)acrylate, poly(ethylene glycol/tetramethylene glycol) mono(meth)acrylate, polyethylene glycol/polytetramethylene glycol mono(meth)acrylate, poly(polypropylene glycol/tetramethylene glycol) mono(meth)acrylate, polypropylene glycol/polytetramethylene glycol mono(meth)acrylate, poly(propylene glycol/1,2-butylene glycol) mono(meth)acrylate, polypropylene glycol/poly(1,2-butylene glycol) mono(meth)acrylate, poly(ethylene glycol/1,2-butylene glycol) mono(meth)acrylate, polyethylene glycol/poly(1,2-butylene glycol) mono(meth)acrylate, poly(tetraethylene glycol/1,2-butylene glycol) mono(meth)acrylate, polytetraethylene glycol/poly(1,2-butylene glycol) mono(meth)acrylate, poly(1,2-butylene glycol) mono(meth)acrylate, poly(ethylene glycol/trimethylene glycol) mono(meth)acrylate, polyethylene glycol/polytrimethylene glycol mono(meth)acrylate, poly(propylene glycol/trimethylene glycol) mono(meth)acrylate, polypropylene glycol/polytrimethylene glycol mono(meth)acrylate, poly(trimethylene glycol/tetramethylene glycol) mono(meth)acrylate, polytrimethylene glycol/polytetramethylene glycol mono(meth)acrylate, poly(1,2-butylene glycol/trimethylene glycol) mono(meth)acrylate, poly(1,2-butylene glycol)/polytrimethylene glycol mono(meth)acrylate, 2-hydroxyethyl (meth)acrylate, 2-hydroxypropyl (meth)acrylate, 2-hydroxybutyl (meth)acrylate, 4-hydroxybutyl (meth)acrylate, poly(1,2-butylene glycol/tetramethylene glycol) mono(meth)acrylate, and poly1,2-butylene glycol/polytetramethylene glycol mono(meth)acrylate.

Note that "poly(ethylene glycol/propylene glycol)" above means a random copolymer of ethylene glycol and propylene glycol, and "polyethylene glycol/polypropylene glycol" means a block copolymer of ethylene glycol and propylene glycol.

The polymerizable monomer (2) is preferably a compound represented by General Formula (2-1) below: 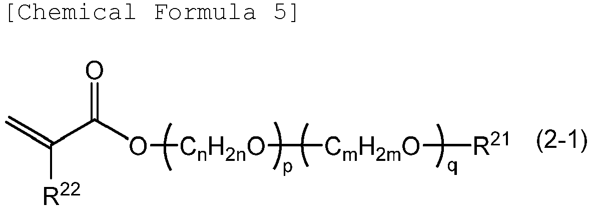 in General Formula (2-1) above,
R²¹ is a hydrogen atom, a C₁₋₃₀ alkyl group, or a phenyl group,
R²² is a hydrogen atom or a methyl group,
n is an integer in a range of 1 to 4,
m is an integer in a range of 1 to 4, and
p and q are each independently an integer in a range of 0 to 200 and satisfy p + q ≥ 1.

The C₁₋₃₀ alkyl group as R²¹ may be any of a linear alkyl group, a branched alkyl group, and a cyclic alkyl group, and specific examples thereof include a methyl group, an ethyl group, a normal propyl group, an isopropyl group, a n-butyl group, a t-butyl group, a n-hexyl group, a cyclohexyl group, a n-octyl group, a hexadecyl group, an adamantyl group, a norbornyl group, a dicyclopentanyl group, a tricyclononyl group, a tricyclodecyl group, a tetracyclododecyl group, and a stearyl group.

The C₁₋₃₀ alkyl group as R²¹ is preferably a C₁₋₂₅ alkyl group and more preferably a C₃₋₁₄ cyclic alkyl group.

In the compound represented by General Formula (2-1) above, the portion of the repeating unit bracketed by p and the repeating unit bracketed by q may be a random copolymer structure of the repeating unit bracketed by p and the repeating unit bracketed by q or a block copolymer structure of the repeating unit bracketed by p and the repeating unit bracketed by q.

The polymerizable monomer (2) may be used individually or in combination.

The polymerizable monomer (2) can be produced by known methods. For the polymerizable monomer (2), commercially available products may be used.

The polymer of the present invention is a copolymer with the polymerizable monomer (1) and the polymerizable monomer (2) as polymerization components, and the polymerization form of the copolymer is not limited to a particular form and may be a random copolymer of the polymerizable monomer (1) and the polymerizable monomer (2) or a block copolymer of the polymerizable monomer (1) and the polymerizable monomer (2).

In the polymer of the present invention, the mass ratio between the polymerizable monomer (1) and the polymerizable monomer (2) is, for example, in a range of the polymerizable monomer (1):the polymerizable monomer (2) = 5:95 to 95:5, preferably in a range of the polymerizable monomer (1):the polymerizable monomer (2) = 25:75 to 90:10, more preferably in a range of the polymerizable monomer (1):the polymerizable monomer (2) = 40:60 to 85:15, and even more preferably in a range of the polymerizable monomer (1):the polymerizable monomer (2) = 50:50 to 85:15.

In the polymer of the present invention, the content ratio of the structure derived from the polymerizable monomer (1) (hereinafter, simply referred to as the "content ratio of the polymerizable monomer (1)") is, for example, 5% by mass or more with respect to the total amount of the polymer, with 15% by mass or more, 35% by mass or more, 45% by mass or more, 50% by mass or more, 55% by mass or more, and 60% by mass or more being preferred in this order.

The upper limit of the content ratio of the polymerizable monomer (1), which is not limited to a particular value is, for example, 95% by mass or less with respect to the total amount of the polymer, with 90% by mass or less, 85% by mass or less, and 80% by mass or less being preferred in this order.

The content ratio of the polymerizable monomer (1) is a value based on the mass of the polymer of the invention (the weight of the polymerizable monomer (1)/the weight of the polymer) and can be adjusted by the raw material preparation ratio of the polymerizable monomer (1) when the polymer of the present invention is produced.

The polymer as defined in the present invention in claim 1 is only required to be a polymer with the polymerizable monomer (1) and the polymerizable monomer (2) as polymerization components and further contains a polymerizable monomer (3) having a C₁₋₃₀ alkyl group.

The alkyl group of the polymerizable monomer (3) is a C₁₋₃₀ alkyl group, preferably a C₁₋₂₅ alkyl group, and more preferably a C₃₋₁₄ alkyl group.

The alkyl group may be linear, branched, or cyclic.

Examples of the polymerizable monomer (3) having the C₁₋₃₀ alkyl group and having the (meth)acryloyl group as the polymerizable unsaturated group include C₁₋₁₈ alkyl esters of (meth)acrylic acid such as methyl (meth)acrylate, ethyl (meth)acrylate, n-propyl (meth)acrylate, isopropyl (meth)acrylate, n-butyl (meth)acrylate, s-butyl (meth)acrylate, isobutyl (meth)acrylate, t-butyl (meth)acrylate, n-pentyl (meth)acrylate, n-hexyl (meth)acrylate, n-heptyl (meth)acrylate, n-octyl (meth)acrylate, 2-ethylhexyl (meth)acrylate, decyl (meth)acrylate, dodecyl (meth)acrylate, stearyl (meth)acrylate, and isostearyl (meth)acrylate; and C₃₋₁₈ bridged cyclic alkyl esters of (meth)acrylic acid such as dicyclopentanyloxyl ethyl (meth)acrylate, isobornyloxyl ethyl (meth)acrylate, isobornyl (meth)acrylate, adamantyl (meth)acrylate, dimethyladamantyl (meth)acrylate, dicyclopentanyl (meth)acrylate, and dicyclopentenyl (meth)acrylate.

Examples of the polymerizable monomer (3) having the C₁₋₃₀ alkyl group and having the vinyl ether group as the polymerizable unsaturated group include alkyl vinyl ethers such as methyl vinyl ether, ethyl vinyl ether, n-propyl vinyl ether, isopropyl vinyl ether, n-butyl vinyl ether, isobutyl vinyl ether, tert-butyl vinyl ether, n-pentyl vinyl ether, n-hexyl vinyl ether, n-octyl vinyl ether, n-dodecyl vinyl ether, 2-ethylhexyl vinyl ether, cyclohexyl vinyl ether; and cycloalkyl vinyl ethers.

Examples of the polymerizable monomer (3) having the C₁₋₃₀ alkyl group and having the (meth)acryloylamino group as the polymerizable unsaturated group include N,N-dimethylacrylamide, N,N-diethylacrylamide, N-isopropylacrylamide, diacetone acrylamide, and acryloylmorpholine.

Examples of the polymerizable monomer (3) having the C₁₋₃₀ alkyl group and having the maleimide group as the polymerizable unsaturated group include methyl maleimide, ethyl maleimide, propyl maleimide, butyl maleimide, hexyl maleimide, octyl maleimide, dodecyl maleimide, stearyl maleimide, and cyclohexylmaleimide.

The polymerizable monomer (3) is preferably a compound represented by General Formula (3-1) below: 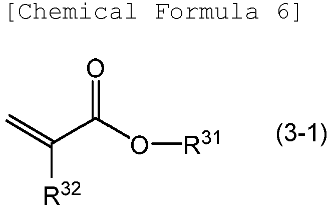 in General Formula (3-1) above,
R³¹ is a C₁₋₃₀ alkyl group, and
R³² is a hydrogen atom or a methyl group.

In the polymerizable monomer (3), an aromatic group may be further bonded to the alkyl group, and examples thereof include benzyl (meth)acrylate, 2-phenoxymethyl (meth)acrylate, and 2-phenoxyethyl (meth)acrylate.

The polymer as defined in the present invention in claim 1 is only required to be a polymer with the polymerizable monomer (1), the polymerizable monomer (2), and the polymerizable monomer (3) as polymerization components and may contain other polymerizable monomers other than the polymerizable monomer (1), the polymerizable monomer (2), and the polymerizable monomer (3) as the polymerization components to the extent that the effects of the present invention are not impaired.

Examples of the other polymerizable monomers include a polymerizable monomer (4) having a fluorine-containing functional group and a polymerizable monomer (5) having an aromatic group.

Examples of the fluorine-containing functional group of the polymerizable monomer (4) include a C₁₋₆ fluorinated alkyl group and a poly(perfluoroalkylene ether) chain-containing group.

The poly(perfluoroalkylene ether) chain is a structure represented by General Formula (PFPE) below, in which a divalent fluorinated hydrocarbon group and an oxygen atom are alternately linked: 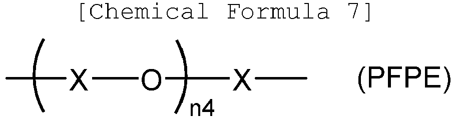 in General Formula (PFPE) above,
Xs are each independently a perfluoroalkylene group, and
n4 is a repeating number.

In the structure represented by General Formula (PFPE) above, when X within the repeating unit bracketed by n4 is two or more kinds, the repeating unit portion bracketed by n4 may be a random copolymer structure of the repeating unit bracketed by n4 or a block copolymer structure of the repeating unit bracketed by n4.

Examples of the perfluoroalkylene group as X include perfluoroalkylene groups (X-1) to (X-6) below.

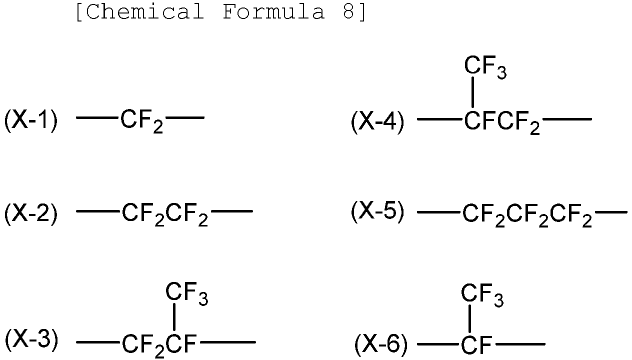

The perfluoroalkylene group as X is preferably a C₁₋₃ perfluoroalkylene group and more preferably a perfluoromethylene group or a perfluoroethylene group.

It is more preferred if both the perfluoromethylene group and the perfluoroethylene group are present as X in General Formula (PFPE) above. When the perfluoromethylene group (X-1) and the perfluoroethylene group (X-2) coexist, the presence ratio (X-1/X-2) (the ratio in terms of number) is preferably 1/10 to 10/1 and more preferably 3/10 to 10/3.

The repeating number as n4 is, for example, an integer in a range of 1 to 300, preferably an integer in a range of 2 to 200, more preferably an integer in a range of 3 to 100, even more preferably an integer in a range of 6 to 70, and most preferably an integer in a range of 12 to 50.

The polymerizable monomer (4) is preferably one or more selected from the group consisting of a compound represented by General Formula (4-1) below and a compound represented by General Formula (4-2) below: 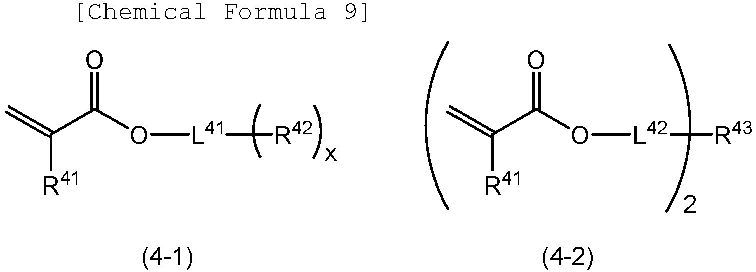 in General Formulae (4-1) and (4-2) above,
R⁴¹ is a hydrogen atom or a methyl group,
L⁴¹ is a divalent or trivalent organic group or a single bond,
L⁴² is a divalent organic group or a single bond,
R⁴² is a fluorine-containing functional group,
R⁴³ is a divalent fluorine-containing functional group, and
x is an integer of 1 or 2.

In General Formulae (4-1) and (4-2) above, examples of the divalent or trivalent organic group as L⁴¹ include the same ones as those for the divalent or trivalent organic group as L¹ described above.

In General Formulae (4-1) and (4-2) above, examples of the divalent organic group as L⁴² include the same ones as those for the divalent organic group as L² described above.

For example, when R⁴³ is a group represented by General Formula (PFPE) above, specific examples of the compound represented by General Formula (4-2) above include the following: 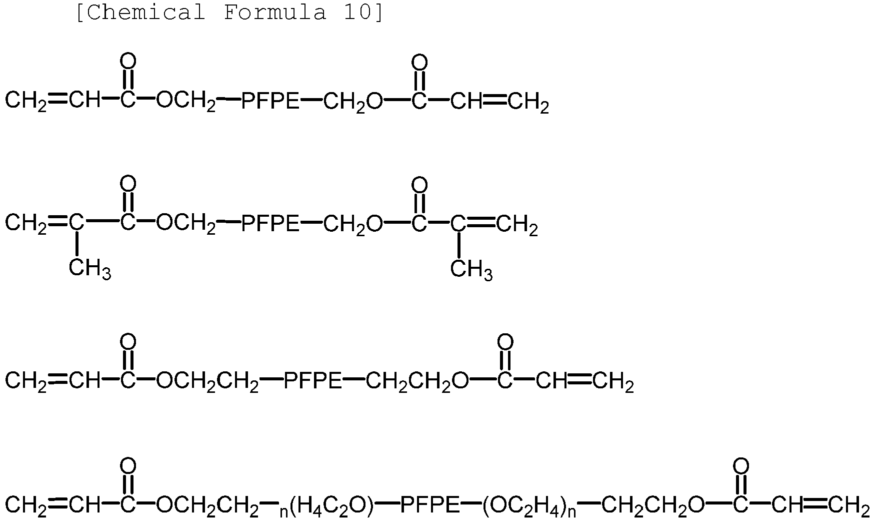 ns are each independently an integer in a range of 1 to 10.

The aromatic group of the polymerizable monomer (5) is preferably a C₆₋₂₀ aromatic group and more preferably a phenyl group, a naphthyl group, an anthracen-1-yl group, or a phenanthrene-1-yl group.

Examples of the polymerizable monomer (5) having an aromatic group include styrene, α-methylstyrene, p-methylstyrene, and p-methoxystyrene.

The polymer as defined in the present invention in claim 1 is a polymer in which the polymerization components substantially contain the polymerizable monomer (1), the polymerizable monomer (2), and the polymerizable monomer (3) and preferably a polymer in which the polymerization components contain only the polymerizable monomer (1), the polymerizable monomer (2), and the optional polymerizable monomer (3). "Substantially contain" refers to a case in which the content ratio of the total of the polymerizable monomer (1), the polymerizable monomer (2), and the polymerizable monomer (3) in the polymerization components is 80% by mass or more, 90% by mass or more, 95% by mass or more, or 99% by mass or more.

The number average molecular weight (Mn) of the polymer of the present invention is preferably in a range of 1,000 to 50,000, more preferably in a range of 1,000 to 30,000, and even more preferably in a range of 1,500 to 10,000.

The weight average molecular weight (Mw) of the polymer of the present invention is preferably in a range of 1,000 to 200,000, more preferably in a range of 1,500 to 150,000, even more preferably in a range of 2,000 to 100,000, and particularly preferably in a range of 3,000 to 50,000.

In the present invention, the weight average molecular weight (Mw) and the number average molecular weight (Mn) are values in terms of polystyrene based on gel permeation chromatography (GPC) measurement.

The values of the number average molecular weight (Mn) and the weight average molecular weight (Mw) of the polymer of the present invention are measured by the method described in examples.

### [Method for Producing Polymer]

The method for producing the polymer of the present invention is not limited to a particular method, and it can be produced by known methods.

The polymer of the present invention can be produced by solution polymerization, bulk polymerization, emulsion polymerization, or the like based on polymerization mechanisms such as radical polymerization, cationic polymerization, and anionic polymerization. For example, in the case of the radical polymerization, a polymerizable monomer mixture is charged into an organic solvent, a general-purpose radical polymerization initiator is added thereto, and thereby the polymer of the present invention can be produced.

As the polymerization initiator, various ones can be used. Examples thereof include peroxides such as t-butylperoxy-2-ethylhexanoate, benzoyl peroxide, and diacyl peroxide; azo compounds such as azobisisobutyronitrile, dimethyl azobisisobutyrate, phenylazotriphenylmethane; and metal chelate compounds such as Mn(acac)₃.

If necessary, chain transfer agents such as lauryl mercaptan, 2-mercaptoethanol, ethyl thioglycolic acid, and octyl thioglycolic acid may be used, and thiol compounds having a coupling group such as γ-mercaptopropyltrimethoxysilane may be used as additives for chain transfer agents or the like.

Examples of the organic solvent include alcohols such as ethanol, isopropyl alcohol, n-butanol, iso-butanol, and tert-butanol; ketones such as acetone, methyl ethyl ketone, methyl isobutyl ketone, and methyl amyl ketone; esters such as methyl acetate, ethyl acetate, butyl acetate, methyl lactate, ethyl lactate, and butyl lactate; monocarboxylates such as methyl 2-oxypropionate, ethyl 2-oxypropionate, propyl 2-oxypropionate, butyl 2-oxypropionate, methyl 2-methoxypropionate, ethyl 2-methoxypropionate, propyl 2-methoxypropionate, and butyl 2-methoxypropionate; polar solvents such as dimethylformamide, dimethyl sulfoxide, and N-methylpyrrolidone; ethers such as methyl cellosolve, cellosolve, butyl cellosolve, butylcarbitol, and ethyl cellosolve acetate; propylene glycols and esters thereof such as propylene glycol, propylene glycol monomethyl ether, propylene glycol monomethyl ether acetate, propylene glycol monoethyl ether acetate, and propylene glycol monobutyl ether acetate; halogen-based solvents such as 1,1,1-trichloroethane and chloroform, ethers such as tetrahydrofuran and dioxane; aromatics such as benzene, toluene, and xylene; and fluorinated inert liquids such as perfluorooctane and perfluorotri-n-butylamine.

These solvents can be used individually or in combination.

The polymer of the present invention can also be produced by performing living polymerization such as living radical polymerization and living anionic polymerization.

In the living radical polymerization, a dormant species, in which the active polymerization end is protected by an atom or a group of atoms, reversibly generates radicals to react with a monomer, thereby causing a growth reaction to proceed, and even when a first monomer is consumed, the growth end does not lose activity to react with a successively added second monomer, and a block polymer can be obtained. Examples of such living radical polymerization include atom transfer radical polymerization (ATRP), reversible addition-fragmentation chain transfer (RAFT), nitroxide-mediated radical polymerization (NMP), and radical polymerization using organotellurium (TERP). There are no particular restrictions on which of these methods should be used, but ATRP is preferred in view of ease of control and other reasons. ATRP performs polymerization with an organic halide, a sulfonyl halide compound, or the like as a polymerization initiator and with a metal complex containing a transition metal compound and a ligand as a catalyst.

Specific examples of the polymerization initiator that can be used in ATRP include 1-phenylethyl chloride, 1-phenylethyl bromide, chloroform, carbon tetrachloride, 2-chloropropionitrile, α,α'-dichloroxylene, α,α'-dibromoxylene, hexakis(α-bromomethyl)benzene, and C₁₋₆ alkyl esters of C₁₋₆ 2-halogenated carboxylic acids (for example, 2-chloropropionic acid, 2-bromopropionic acid, 2-chloroisobutyric acid, and 2-bromoisobutyric acid).

More specific examples of the C₁₋₆ alkyl esters of C₁₋₆ 2-halogenated carboxylic acids include methyl 2-chloropropionate, ethyl 2-chloropropionate, methyl 2-bromopropionate, and ethyl 2-bromoisobutyrate.

The transition metal compound that can be used in ATRP are those represented by Mⁿ⁺Xₙ.

The transition metal Mⁿ⁺ of the transition metal compound represented by Mⁿ⁺Xₙ can be selected from the group consisting of Cu⁺, Cu²⁺, Fe²⁺, Fe³⁺, Ru²⁺, Ru³⁺, Cr²⁺, Cr³⁺, Mo⁰, Mo⁺, Mo²⁺, Mo³⁺, W²⁺, W³⁺, Rh³⁺, Rh⁴⁺, Co⁺, CO²⁺, Re²⁺, Re³⁺, Ni⁰, Ni⁺, Mn³⁺, Mn⁴⁺, V²⁺, V³⁺, Zn⁺, Zn²⁺, Au⁺, Au²⁺, Ag⁺, and Ag²⁺.

X of the transition metal compound represented by Mⁿ⁺Xₙ can be selected from the group consisting of a halogen atom, a C₁₋₆ alkoxyl group, (SO₄)_{1/2}, (PO₄)_{1/3}, (HPO₄)_{1/2}, (H₂PO₄), triflate, hexafluorophosphate, methane sulfonate, arylsulfonates (preferably benzenesulfonate or toluene sulfonate), SeR¹¹, CN, and R¹²COO. R¹¹ represents an aryl group or a C₁₋₂₀ (preferably C₁₋₁₀) linear or branched alkyl group, and R¹² represents a hydrogen atom or a C₁₋₆ linear or branched alkyl group (preferably a methyl group) that may be replaced with halogen one to five times (preferably one to three times with fluorine or chlorine).

The letter n of the transition metal compound represented by Mⁿ⁺Xₙ represents the formal charge on the metal and is an integer of 0 to 7.

Examples of a ligand compound that can coordinate with the transition metal of the transition metal compound include compounds having a ligand containing one or more nitrogen atoms, oxygen atoms, phosphorus atoms, or sulfur atoms that can coordinate with the transition metal via a σ bond, compounds having a ligand containing two or more carbon atoms that can coordinate with the transition metal via a π bond, and compounds having a ligand that can coordinate with the transition metal via a µ bond or an η bond.

The transition metal complex is not limited to a particular transition metal complex. Preferred examples thereof include transition metal complexes of Groups 7, 8, 9, 10, and 11, and more preferred examples thereof include complexes of zero-valent copper, monovalent copper, divalent ruthenium, divalent iron, and divalent nickel.

Specific examples of the catalyst that can be used in ATRP, when the central metal is copper, include complexes with ligands such as 2,2'-bipyridyl and derivatives thereof, 1,10-phenanthroline and derivatives thereof, and polyamines such as tetramethylethylenediamine, pentamethyldiethylenediamine, and hexamethyltris(2-aminoethyl)amine. Examples of the divalent ruthenium complexes include dichlorotris(triphenylphosphine)ruthenium, dichlorotris(tributylphosphine)ruthenium, dichloro(cyclooctadiene)ruthenium, dichlorobenzene ruthenium, dichloro-p-cymene ruthenium, dichloro(norbornadiene)ruthenium, cis-dichlorobis(2,2'-bipyridine)ruthenium, dichlorotris(1,10-phenanthroline)ruthenium, and carbonylchlorohydrido tris(triphenylphosphine)ruthenium. Further, examples of the divalent iron complexes include bistriphenylphosphine complexes and triazacyclononane complexes.

In the living radical polymerization, a solvent is preferably used.

Examples of the solvent for use in the living radical polymerization include ester-based solvents such as ethyl acetate, butyl acetate, and propylene glycol monomethyl ether acetate; ether-based solvents such as diisopropyl ether, dimethoxyethane, and diethylene glycol dimethyl ether; halogen-based solvents such as dichloromethane and dichloroethane; aromatic solvents such as toluene and xylene; ketone-based solvents such as methyl ethyl ketone, methyl isobutyl ketone, and cyclohexanone; alcohol-based solvents such as methanol, ethanol, and isopropanol; and aprotic polar solvents such as dimethyl formamide and dimethyl sulfoxide.

The solvent may be used individually or in combination.

The polymerization temperature during the living radical polymerization is preferably in a range of room temperature to 120°C.

When the polymer of the present invention is produced by the living radical polymerization, metals caused by the transition metal compound used in the polymerization may remain in the resulting polymer. The metals remaining in the resulting polymer may be removed using activated alumina or the like after the end of the polymerization.

### [Lubricating Oil Composition]

The defoaming agent of the present invention can be suitably used as a defoaming agent for a lubricating oil composition, and the lubricating oil composition of the present invention contains the defoaming agent of the present invention.

The defoaming agent of the present invention has high defoaming performance and can be used without restrictions for lubricating oil compositions for, for example, drive system devices such as shock absorbers, transmissions, and power steering of automobiles.

The content ratio of the defoaming agent of the present invention in the lubricating oil composition of the present invention, which is not limited to a particular content, is, for example, in a range of 1 to 1,000 ppm by mass, preferably in a range of 5 to 700 ppm by mass, and more preferably in a range of 10 to 400 ppm by mass with respect to the total amount of the lubricating oil composition.

For a lubricating oil base oil of the lubricating oil composition of the present invention, known ones can be used, which may be a mineral oil, a synthetic oil, or a mixture oil of the mineral oil and the synthetic oil.

Examples of the mineral oil include mineral oils obtained by refining lubricating oil fractions obtained by vacuum distilling an atmospheric residual oil obtained by atmospheric distilling crude oil by performing one or more of the following processes: solvent deasphalting, solvent extraction, hydrocracking, solvent dewaxing, contact dewaxing, and hydrogenation refining. Examples thereof include paraffin-based mineral oils and naphthene-based mineral oils.

Examples thereof also include mineral oils produced by isomerizing mineral oil-based waxes or waxes produced by the Fischer-Tropsch method or the like (GTL waxes).

Examples of the synthetic oil include polyolefins such as polybutene, α-olefin monopolymers, and copolymers (for example, ethylene-α-olefin copolymers), various esters such as polyol esters, dibasic acid esters, and phosphates, and various ethers such as polyphenyl ether, polyglycol, alkylbenzenes, and alkylnaphthalenes.

The lubricating oil base oil may be used individually or in combination.

The kinematic viscosity of the lubricating oil base oil at 100°C is preferably in a range of 2 to 20 mm²/s, more preferably in a range of 2 to 15 mm²/s, and even more preferably in a range of 3 to 10 mm²/s.

By the kinematic viscosity of the lubricating oil base oil at 100°C being in the above range, evaporation loss is low and power loss due to viscous resistance is not great very much, and thus a fuel economy improvement effect can be easily obtained.

The lubricating oil base oil has a paraffin content (may be referred to as %Cp) by n-d-M ring analysis of preferably 70% or more, more preferably 75% or more, and even more preferably 80% or more.

By the paraffin content being within the above range, the lubricating oil base oil has good oxidation stability and the like.

The content ratio of the lubricating oil base oil in the lubricating oil composition is, for example, in a range of 65 to 95% by mass, preferably in a range of 70 to 95% by mass, and more preferably in a range of 70 to 90% by mass with respect to the total amount of the lubricating oil composition.

The lubricating oil composition of the present invention is only required to contain the defoaming agent of the present invention and the lubricating oil base oil and may further contain other additives.

As the other additives, additives such as ashless cleaning agents, ashless friction modifiers, wear-resistant agents, extreme pressure agents, viscosity index improvers, metal deactivators, pour point depressants, and rust inhibitors may be contained. These additives may be used individually or in combination.

Each content of the other additives can be adjusted as appropriate within the range that does not impair the effects of the present invention and is usually 0.001 to 25% by mass, preferably 0.005 to 20% by mass, and more preferably 0.01 to 15% by mass based on the total amount of the lubricating oil composition.

The total content of other additives is preferably 25% by mass or less, more preferably 20% by mass or less, and even more preferably 15% by mass or less based on the total amount of the lubricating oil composition.

Examples of the ashless cleaning agents include alkenyl succinic acid imides such as alkenyl succinic acid monoimide and alkenyl succinic acid bisimide, and boron-modified alkenyl succinic acid imides.

Examples of the ashless friction modifiers include aliphatic amines, fatty acid esters, fatty acid amides, fatty acids, aliphatic alcohols, and aliphatic ethers having at least one C₆₋₃₀ alkyl or alkenyl group in their molecules.

Examples of the wear-resistant agents or the extreme pressure agents include sulfur-containing compounds such as zinc dithiophosphate; phosphorus-containing compounds such as phosphites, phosphates, phosphonates, and amine salts and metal salts thereof; and sulfur- and phosphorus-containing wear-resistant agents such as thiophosphites, thiophosphates, thiophosphonates, and amine salts and metal salts thereof.

Examples of the viscosity index improvers include polymethacrylate, dispersed polymethacrylate, olefin-based copolymers (for example, ethylene-propylene copolymers and the like), dispersed olefin-based copolymers, styrene-based copolymers (for example, styrene-diene copolymers, styreneisoprene copolymers, and the like).

Examples of the metal deactivators include benzotriazole-based compounds, tolyltriazole-based compounds, imidazole-based compounds, and pyrimidine-based compounds.

Examples of the pour point depressants include ethylene-vinyl acetate copolymers, condensates of chlorinated paraffins and naphthalene, condensates of chlorinated paraffins and phenol, polymethacrylate, and polyalkylstyrenes.

Examples of the rust inhibitors include petroleum sulfonates, alkylbenzene sulfonates, dinonylnaphthalene sulfonate, alkenyl succinates, and polyhydric alcohol esters.

### [Examples]

The following describes the present invention specifically by examples and comparative examples.

The invention is not limited to the following examples.

In the examples and the comparative examples, the weight average molecular weight (Mw) and the number average molecular weight (Mn) are values in terms of polystyrene based on gel permeation chromatography (GPC) measurement.

The GPC measurement conditions are as follows.

### [GPC Measurement Conditions]

Measuring apparatus: High-speed GPC apparatus "HLC-8320GPC" manufactured by Tosoh Corporation
Column: "TSK GUARDCOLUMN SuperHZ-L" manufactured by Tosoh Corporation + "TSK gel SuperHZM-N" manufactured by Tosoh Corporation + "TSK gel SuperHZM-N" manufactured by Tosoh Corporation + "TSK gel SuperHZM-N" manufactured by Tosoh Corporation + "TSK gel SuperHZM-N" manufactured by Tosoh Corporation.
Detector: RI (a differential refractometer)
Data processing: "EcoSEC Data Analysis Version 1.07" manufactured by Tosoh Corporation
Column temperature: 40°C
Developing solvent: tetrahydrofuran
Flow rate: 0.35 mL/minute
Measurement sample: 7.5 mg of a sample was dissolved in 10 ml of tetrahydrofuran, and the resulting solution was filtered through a microfilter to be a measurement sample.
Sample injection amount: 20 µL
Standard sample: the following monodisperse polystyrenes of known molecular weights were used in conformity with the measurement manual for "HLC-8320GPC" described above.

### (Monodisperse Polystyrenes)

"A-300" manufactured by Tosoh Corporation
"A-500" manufactured by Tosoh Corporation
"A-1000" manufactured by Tosoh Corporation
"A-2500" manufactured by Tosoh Corporation
"A-5000" manufactured by Tosoh Corporation
"F-1" manufactured by Tosoh Corporation
"F-2" manufactured by Tosoh Corporation
"F-4" manufactured by Tosoh Corporation
"F-10" manufactured by Tosoh Corporation
"F-20" manufactured by Tosoh Corporation
"F-40" manufactured by Tosoh Corporation
"F-80" manufactured by Tosoh Corporation
"F-128" manufactured by Tosoh Corporation
"F-288" manufactured by Tosoh Corporation

### (Synthesis Example 1: Synthesis of Defoaming Agent (1))

Into a glass flask equipped with a stirrer, a thermometer, a cooling tube, and dropping apparatuses, 20 parts by mass of n-butyl acetate as a solvent was charged, and the temperature was raised to 105°C with stirring under a nitrogen stream. Next, two kinds of dropping liquids, which were a monomer solution in which 30 parts by mass of a compound represented by Formula (A) below and 20 parts by mass of methoxy polyethylene glycol methacrylate (the repeating number of the ethylene oxide chain: about nine) had been dissolved in 70 parts by mass of n-butyl acetate, and a polymerization initiator solution in which 5 parts by mass of t-butylperoxy-2-ethylhexanoate as a radical polymerization initiator had been dissolved in 15 parts by mass of n-butyl acetate, were set in separate dropping apparatuses. The two kinds of dropping liquids were simultaneously dropped over 2 hours while the inside of the flask was maintained at 105°C. After the end of dropping, the mixture was stirred at 105°C for 3 hours to obtain a defoaming agent (1) as a polymer having a polyoxyalkylene chain-containing functional group and a silicone chain-containing functional group.

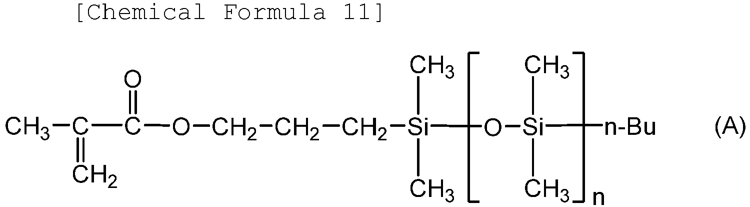

(The repeating portion as n is about 65.)

The molecular weight of the obtained defoaming agent (1) was measured by GPC to find that it had a weight average molecular weight (Mw) of 17,000.

### (Synthesis Example 2: Synthesis of Defoaming Agent (2))

In the same manner as in Synthesis Example 1 except that the addition amount of t-butylperoxy-2-ethylhexanoate as a radical polymerization initiator was changed to 2 parts by mass, a defoaming agent (2) as a polymer having a polyoxyalkylene chain-containing functional group and a silicone chain-containing functional group was produced.

The molecular weight of the obtained defoaming agent (2) was measured by GPC to find that it had a weight average molecular weight (Mw) of 30,400.

### (Synthesis Example 3: Synthesis of Defoaming Agent (3))

In the same manner as in Synthesis Example 2 except that 50 parts by mass of the compound represented by Formula (A) above, 40 parts by mass of methoxy polyethylene glycol methacrylate (the repeating number of the ethylene oxide chain: about nine), and 10 parts by mass of methyl acrylate were used, a defoaming agent (3) as a polymer having a polyoxyalkylene chain-containing functional group and a silicone chain-containing functional group was obtained.

The molecular weight of the obtained defoaming agent (3) was measured by GPC to find that it had a weight average molecular weight (Mw) of 29,900.

### (Synthesis Example 4: Synthesis of Defoaming Agent (4))

In the same manner as in Synthesis Example 1 except that 57 parts by mass of the compound represented by Formula (A) above, 37 parts by mass of methoxy polyethylene glycol methacrylate (the repeating number of the ethylene oxide chain: about nine), and 6 parts by mass of dicyclopentanyl acrylate were used, a defoaming agent (4) as a polymer having polyoxyalkylene chain-containing functional groups, a silicone chain-containing functional group, and a cyclic alkyl group was obtained.

The molecular weight of the obtained defoaming agent (4) was measured by GPC to find that it had a weight average molecular weight (Mw) of 43,200.

A commercially available dimethyl silicone ("KF-96-60,000cs" manufactured by Shin-Etsu Chemical Co., Ltd.) represented below was separately prepared as a defoaming agent (1').

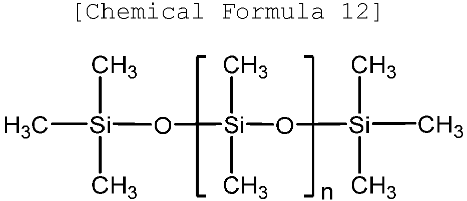

The following foaming test was conducted using the defoaming agents produced above to evaluate the defoaming performance of the defoaming agents. Table 1 lists the results.

### (Preparation of Lubricating Oil Composition)

To 100 parts by mass of a base lubricating oil containing a small amount of various additives (a viscosity index improver, a phosphite compound, a thiadiazole compound, a calcium-based cleaning agent, a metal deactivator, an ashless dispersant, an antioxidant, and the like) in a lubricating oil base oil (a paraffin-based mineral oil) as a main component, the defoaming agents listed in Table 1 were added in the amounts listed in Table 1 with the diluents listed in Table 1 to make respective lubricating oil compositions.

### (Foaming Test)

The obtained lubricating oil compositions were foamed for 5 minutes under the temperature condition of Sequence II (93.5°C) by a method conforming to JIS K2518: 2017, and the amount of foam (mL) after a lapse of 5 seconds from shutting off air supply was defined as a foaming amount of the lubricating oil compositions. Table 1 lists the results. A smaller foaming amount means better defoaming performance.

**[Table 1]**

| | Example 1* | Example 2* | Example 3 | Example 4 | Comp. Example 1 | Comp. Example 2 |
|---|---|---|---|---|---|---|
| Defoaming agent | Defoaming agent (1) | Defoaming agent (2) | Defoaming agent (3) | Defoaming agent (4) | - | Defoaming agent (1') |
| Diluent | Cyclohexano ne | Cyclohexano ne | Cyclohexano ne | Cyclohexano ne | | Heptane |
| Addition amount [ppm by mass] | 20 | 20 | 20 | 20 | - | 20 |
| Active component amount [% by mass] | 1 | 1 | 1 | 1 | - | 1 |
| Foaming amount [ml] | 0 | 0 | 0 | 0 | 100 | 20 |

| | | | | | | |
|---|---|---|---|---|---|---|
| Examples 1* and 2* are Reference Examples. | | | | | | |

The results of the examples and the comparative examples indicate that introducing the polyoxyalkylene chain can reduce the foaming amount of the lubricating oil.

## Claims

1. A lubricating oil composition comprising:
a lubricating oil base oil; and
a defoaming agent,
the defoaming agent being a polymer with a polymerizable monomer (1) having a silicone chain-containing functional group as a compound represented by General Formula (1-1) below and a polymerizable monomer (2) having a polyoxyalkylene chain-containing functional group as polymerization components: 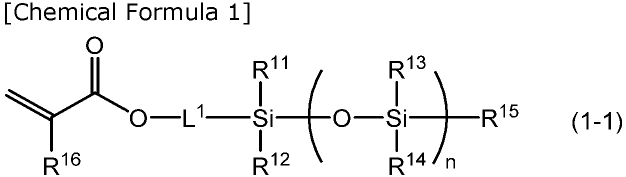
in General Formula (1-1) above,
R¹¹ is a C₁₋₆ alkyl group or a group represented by -OSi(R¹⁷)₃ (R¹⁷s are each independently a C₁₋₃ alkyl group),
R¹² is a C₁₋₆ alkyl group or a group represented by -OSi(R¹⁸)₃ (R¹⁸s are each independently a C₁₋₃ alkyl group),
R¹³ is a C₁₋₆ alkyl group,
R¹⁴ is a C₁₋₆ alkyl group,
R¹⁵ is a C₁₋₆ alkyl group,
R¹⁶ is a hydrogen atom or a methyl group,
L¹ is a divalent organic group, and
n is an integer of 0 or more;
wherein the polymerization components further contain a polymerizable monomer (3) having a C₁₋₃₀ alkyl group.

2. A lubricating oil composition comprising:
a lubricating oil base oil; and
a defoaming agent,
the defoaming agent being a polymer with a polymerizable monomer (1) having a silicone chain-containing functional group and a polymerizable monomer (2) having a polyoxyalkylene chain-containing functional group as a compound represented by Formula (2-1) below as polymerization components: 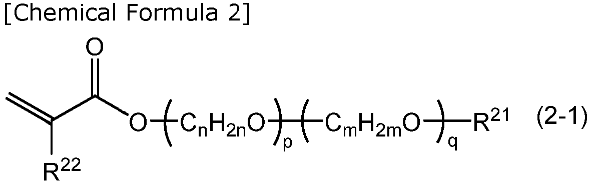
in General Formula (2-1) above,
R²¹ is a hydrogen atom, a C₁₋₃₀ alkyl group, or a phenyl group,
R²² is a hydrogen atom or a methyl group,
n is an integer in a range of 1 to 4,
m is an integer in a range of 1 to 4, and
p and q are each independently an integer in a range of 0 to 200 and satisfy p + q ≥ 1;
wherein the polymerization components further contain a polymerizable monomer (3) having a C₁₋₃₀ alkyl group.

3. The lubricating oil composition according to claim 2, wherein the polymerizable monomer (1) is a compound represented by General Formula (1-1) below: 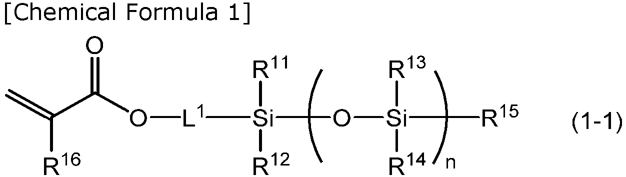 in General Formula (1-1) above,
R¹¹ is a C₁₋₆ alkyl group or a group represented by -OSi(R¹⁷)₃ (R¹⁷s are each independently a C₁₋₃ alkyl group),
R¹² is a C₁₋₆ alkyl group or a group represented by -OSi(R¹⁸)₃ (R¹⁸s are each independently a C₁₋₃ alkyl group),
R¹³ is a C₁₋₆ alkyl group,
R¹⁴ is a C₁₋₆ alkyl group,
R¹⁵ is a C₁₋₆ alkyl group,
R¹⁶ is a hydrogen atom or a methyl group,
L¹ is a divalent organic group, and
n is an integer of 0 or more.

4. The lubricating oil composition according to claim 1, wherein the polymerizable monomer (2) is a compound represented by Formula (2-1) below: 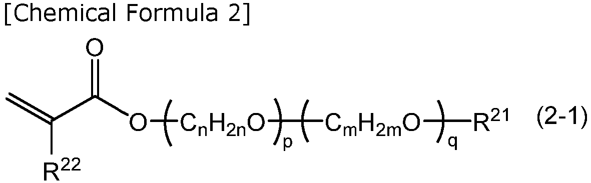 in General Formula (2-1) above,
R²¹ is a hydrogen atom, a C₁₋₃₀ alkyl group, or a phenyl group,
R²² is a hydrogen atom or a methyl group,
n is an integer in a range of 1 to 4,
m is an integer in a range of 1 to 4, and
p and q are each independently an integer in a range of 0 to 200 and satisfy p + q ≥ 1.

5. The lubricating oil composition according to any one of claims 1 to 4, wherein the polymerizable monomer (3) is a compound represented by Formula (3-1) below: 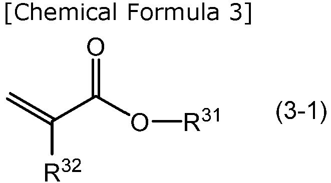 in General Formula (3-1) above,
R³¹ is a C₁₋₃₀ alkyl group, and
R³² is a hydrogen atom or a methyl group.

6. The lubricating oil composition according to any one of claims 1 to 4, wherein the C₁₋₃₀ alkyl group is a C₃₋₁₄ cyclic alkyl group.

7. The lubricating oil composition according to claim 1 or 2, wherein a mass ratio between the polymerizable monomer (1) and the polymerizable monomer (2) is in a range of the polymerizable monomer (1):the polymerizable monomer (2) = 40:60 to 80:20.

8. The lubricating oil composition according to claim 1 or 2, wherein the polymer has a weight average molecular weight in a range of 3,000 to 50,000.

9. Use of the lubricating oil composition according to claim 1 or 2 in a drive part of a machine.

10. Use according to claim 9,
(i) in a machine including an internal combustion engine or an electric motor for lubrication of a drive part of the machine; or
(ii) in an automobile including an internal combustion engine or an electric motor for lubrication of a drive part of the automobile.

## Patentansprüche

1. Schmierölzusammensetzung, umfassend:
ein Schmieröl-Basisöl; und
ein Entschäumungsmittel,
wobei das Entschäumungsmittel ein Polymer mit einem polymerisierbaren Monomer (1), das eine Silikonketten-enthaltende funktionelle Gruppe als eine durch die nachstehende allgemeine Formel (1-1) dargestellte Verbindung aufweist, und einem polymerisierbaren Monomer (2), das eine Polyoxyalkylenketten-enthaltende funktionelle Gruppe aufweist, als Polymerisationskomponenten ist: 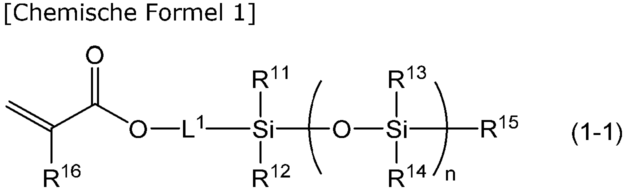
in der obigen allgemeinen Formel (1-1)
ist R¹¹ eine C₁₋₆-Alkylgruppe oder eine durch -OSi(R¹⁷)₃ dargestellte Gruppe (R¹⁷ sind jeweils unabhängig eine C₁₋₃-Alkylgruppe),
ist R¹² eine C₁₋₆-Alkylgruppe oder eine durch -OSi(R¹⁸)₃ dargestellte Gruppe (R¹⁸ sind jeweils unabhängig eine C₁₋₃-Alkylgruppe),
ist R¹³ eine C₁₋₆-Alkylgruppe,
ist R¹⁴ eine C₁₋₆-Alkylgruppe,
ist R¹⁵ eine C₁₋₆-Alkylgruppe,
ist R¹⁶ ein Wasserstoffatom oder eine Methylgruppe,
ist L¹ eine divalente organische Gruppe und
ist n eine ganze Zahl von 0 oder mehr;
wobei die Polymerisationskomponenten ferner ein polymerisierbares Monomer (3), das eine C₁₋₃₀-Alkylgruppe aufweist, enthalten.

2. Schmierölzusammensetzung, umfassend:
ein Schmieröl-Basisöl; und
ein Entschäumungsmittel,
wobei das Entschäumungsmittel ein Polymer mit einem polymerisierbaren Monomer (1), das eine Silikonketten-enthaltende funktionelle Gruppe aufweist, und einem polymerisierbaren Monomer (2), das eine Polyoxyalkylenketten-enthaltende funktionelle Gruppe als eine durch die nachstehende Formel (2-1) dargestellte Verbindung aufweist, als Polymerisationskomponenten ist: 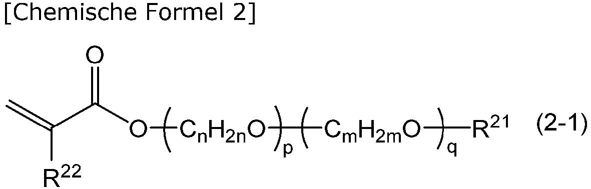
in der obigen allgemeinen Formel (2-1)
ist R²¹ ein Wasserstoffatom, eine C₁₋₃₀-Alkylgruppe oder eine Phenylgruppe,
ist R²² ein Wasserstoffatom oder eine Methylgruppe,
ist n eine ganze Zahl im Bereich von 1 bis 4,
ist m eine ganze Zahl im Bereich von 1 bis 4, und
sind p und q jeweils unabhängig eine ganze Zahl in einem Bereich von 0 bis 200 und erfüllen p + q ≥ 1;
wobei die Polymerisationskomponenten ferner ein polymerisierbares Monomer (3), das eine C₁₋₃₀-Alkylgruppe aufweist, enthalten.

3. Schmierölzusammensetzung nach Anspruch 2, wobei das polymerisierbare Monomer (1) eine durch die nachstehende allgemeine Formel (1-1) dargestellte Verbindung ist: 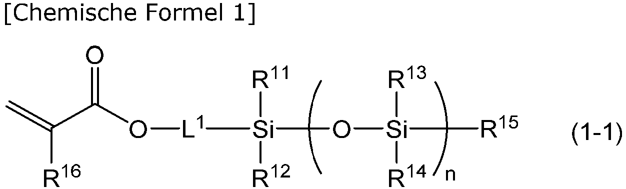 in der obigen allgemeinen Formel (1-1)
ist R¹¹ eine C₁₋₆-Alkylgruppe oder eine durch -OSi(R¹⁷)₃ dargestellte Gruppe (R¹⁷ sind jeweils unabhängig eine C₁₋₃-Alkylgruppe),
ist R¹² eine C₁₋₆-Alkylgruppe oder eine durch -OSi(R¹⁸)₃ dargestellte Gruppe (R¹⁸ sind jeweils unabhängig eine C₁₋₃-Alkylgruppe),
ist R¹³ eine C₁₋₆-Alkylgruppe,
ist R¹⁴ eine C₁₋₆-Alkylgruppe,
ist R¹⁵ eine C₁₋₆-Alkylgruppe,
ist R¹⁶ ein Wasserstoffatom oder eine Methylgruppe,
ist L¹ eine divalente organische Gruppe und
ist n eine ganze Zahl von 0 oder mehr.

4. Schmierölzusammensetzung nach Anspruch 1, wobei das polymerisierbare Monomer (2) eine durch die nachstehende Formel (2-1) dargestellte Verbindung ist: 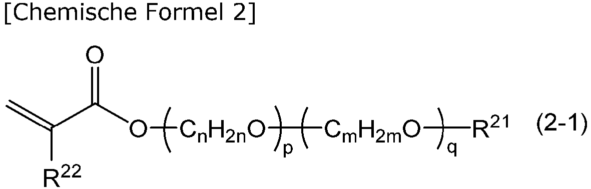 in der obigen allgemeinen Formel (2-1)
ist R²¹ ein Wasserstoffatom, eine C₁₋₃₀-Alkylgruppe oder eine Phenylgruppe,
ist R²² ein Wasserstoffatom oder eine Methylgruppe,
ist n eine ganze Zahl im Bereich von 1 bis 4,
ist m eine ganze Zahl im Bereich von 1 bis 4, und
sind p und q jeweils unabhängig eine ganze Zahl in einem Bereich von 0 bis 200 und erfüllen p + q ≥ 1.

5. Schmierölzusammensetzung nach einem der Ansprüche 1 bis 4, wobei das polymerisierbare Monomer (3) eine durch die nachstehende Formel (3-1) dargestellte Verbindung ist: 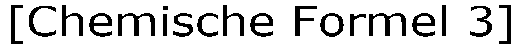 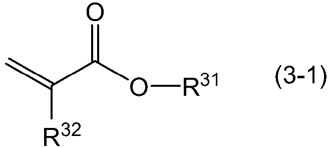 in der obigen allgemeinen Formel (3-1)
ist R³¹ eine C₁₋₃₀-Alkylgruppe und
ist R³² ein Wasserstoffatom oder eine Methylgruppe.

6. Schmierölzusammensetzung nach einem der Ansprüche 1 bis 4, wobei die C₁₋₃₀-Alkylgruppe eine cyclische C₃₋₁₄-Alkylgruppe ist.

7. Schmierölzusammensetzung nach Anspruch 1 oder 2, wobei ein Massenverhältnis zwischen dem polymerisierbaren Monomer (1) und dem polymerisierbaren Monomer (2) in einem Bereich von polymerisierbarem Monomer (1):polymerisierbarem Monomer (2) = 40:60 bis 80:20 ist.

8. Schmierölzusammensetzung nach Anspruch 1 oder 2, wobei das Polymer ein gewichtsmittleres Molekulargewicht in einem Bereich von 3.000 bis 50.000 aufweist.

9. Verwendung der Schmierölzusammensetzung nach Anspruch 1 oder 2 in einem Antriebsteil einer Maschine.

10. Verwendung nach Anspruch 9,
(i) in einer Maschine beinhaltend einen Verbrennungsmotor oder einen Elektromotor zur Schmierung eines Antriebsteils der Maschine; oder
(ii) in einem Kraftfahrzeug beinhaltend einen interne Verbrennungsmotor oder einen Elektromotor zur Schmierung eines Antriebsteils des Kraftfahrzeugs.

## Revendications

1. Composition d'huile lubrifiante comprenant :
une huile de base d'huile lubrifiante ; et
un agent antimousse,
l'agent antimousse étant un polymère avec un monomère polymérisable (1) portant un groupe fonctionnel contenant une chaîne silicone sous la forme d'un composé représenté par la formule générale (1-1) ci-dessous et un monomère polymérisable (2) portant un groupe fonctionnel contenant une chaîne polyoxyalkylène en tant que composants de polymérisation : 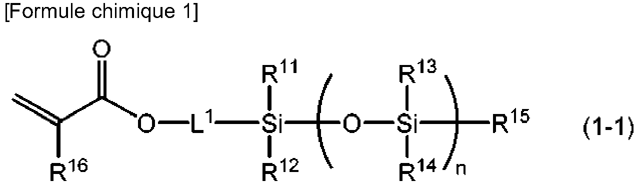
dans la formule générale (1-1) ci-dessus,
R¹¹ représente un groupe alkyle en C₁₋₆ ou un groupe représenté par -OSi(R¹⁷)₃ (les R¹⁷ représentent chacun indépendamment un groupe alkyle en C₁₋₃),
R¹² représente un groupe alkyle en C₁₋₆ ou un groupe représenté par -OSi(R¹⁸)₃ (les R¹⁸ représentent chacun indépendamment un groupe alkyle en C₁₋₃),
R¹³ représente un groupe alkyle en C₁₋₆,
R¹⁴ représente un groupe alkyle en C₁₋₆,
R¹⁵ représente un groupe alkyle en C₁₋₆,
R¹⁶ représente un atome d'hydrogène ou un groupe méthyle,
L¹ représente un groupe organique divalent, et
n représente un entier valant 0 ou plus ;
les composants de polymérisation contenant en outre un monomère polymérisable (3) portant un groupe alkyle en C₁₋₃₀.

2. Composition d'huile lubrifiante comprenant :
une huile de base d'huile lubrifiante ; et
un agent antimousse,
l'agent antimousse étant un polymère avec un monomère polymérisable (1) portant un groupe fonctionnel contenant une chaîne silicone et un monomère polymérisable (2) portant un groupe fonctionnel contenant une chaîne polyoxyalkylène sous la forme d'un composé représenté par la formule générale (2-1) ci-dessous en tant que composants de polymérisation : 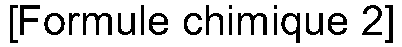 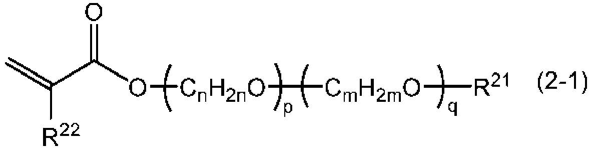
dans la formule générale (2-1) ci-dessus,
R²¹ représente un atome d'hydrogène, un groupe alkyle en C₁₋₃₀ ou un groupe phényle,
R²² représente un atome d'hydrogène ou un groupe méthyle,
n représente un entier compris entre 1 et 4,
m représente un entier compris entre 1 et 4, et
p et q représentent chacun indépendamment un entier compris entre 0 et 200 et vérifient p + q ≥ 1 ;
les composants de polymérisation contenant en outre un monomère polymérisable (3) portant un groupe alkyle en C₁₋₃₀.

3. Composition d'huile lubrifiante selon la revendication 2, dans laquelle le monomère polymérisable (1) est un composé représenté par la formule générale (1-1) ci-dessous : 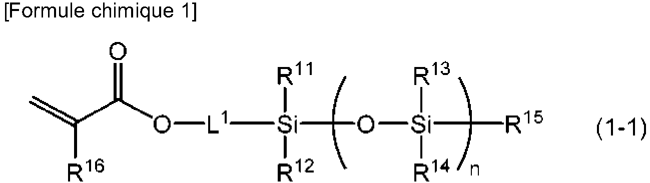 dans la formule générale (1-1) ci-dessus,
R¹¹ représente un groupe alkyle en C₁₋₆ ou un groupe représenté par -OSi(R¹⁷)₃ (les R¹⁷ représentent chacun indépendamment un groupe alkyle en C₁₋₃),
R¹² représente un groupe alkyle en C₁₋₆ ou un groupe représenté par -OSi(R¹⁸)₃ (les R¹⁸ représentent chacun indépendamment un groupe alkyle en C₁₋₃),
R¹³ représente un groupe alkyle en C₁₋₆,
R¹⁴ représente un groupe alkyle en C₁₋₆,
R¹⁵ représente un groupe alkyle en C₁₋₆,
R¹⁶ représente un atome d'hydrogène ou un groupe méthyle,
L¹ représente un groupe organique divalent, et
n représente un entier valant 0 ou plus.

4. Composition d'huile lubrifiante selon la revendication 1, dans laquelle le monomère polymérisable (2) est un composé représenté par la formule (2-1) ci-dessous : 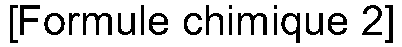 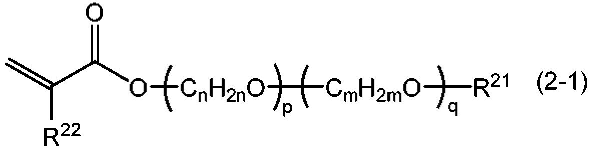 dans la formule générale (2-1) ci-dessus,
R²¹ représente un atome d'hydrogène, un groupe alkyle en C₁₋₃₀ ou un groupe phényle,
R²² représente un atome d'hydrogène ou un groupe méthyle,
n représente un entier compris entre 1 et 4,
m représente un entier compris entre 1 et 4, et
p et q représentent chacun indépendamment un entier compris entre 0 et 200 et vérifient p + q ≥ 1.

5. Composition d'huile lubrifiante selon l'une quelconque des revendications 1 à 4, dans laquelle le monomère polymérisable (3) est un composé représenté par la formule (3-1) ci-dessous : 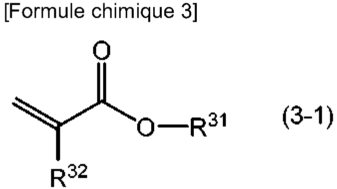 dans la formule générale (3-1) ci-dessus,
R³¹ représente un groupe alkyle en C₁₋₃₀, et
R³² représente un atome d'hydrogène ou un groupe méthyle.

6. Composition d'huile lubrifiante selon l'une quelconque des revendications 1 à 4, dans laquelle le groupe alkyle en C₁₋₃₀ est un groupe alkyle cyclique en C₃₋₁₄.

7. Composition d'huile lubrifiante selon la revendication 1 ou 2, dans laquelle un rapport massique entre le monomère polymérisable (1) et le monomère polymérisable (2) se situe dans une plage monomère polymérisable (1)/monomère polymérisable (2) = 40/60 à 80/20.

8. Composition d'huile lubrifiante selon la revendication 1 ou 2, dans laquelle le polymère possède un poids moléculaire moyen en poids compris entre 3000 à 50 000.

9. Utilisation de la composition d'huile lubrifiante selon la revendication 1 ou 2 dans une partie entraînement d'une machine.

10. Utilisation selon la revendication 9,
(i) dans une machine comportant un moteur à combustion interne ou un moteur électrique pour la lubrification d'une partie entraînement de la machine ; ou
(ii) dans une automobile comportant un moteur à combustion interne ou un moteur électrique pour la lubrification d'une partie entraînement de l'automobile.
